# EUROPÄISCHE PATENTSCHRIFT

(11) **EP 2 610 457 B1**
(45) Veröffentlichungstag und Bekanntmachung des Hinweises auf die Patenterteilung: **09.01.2019**
(21) Anmeldenummer: 12194326.0
(22) Anmeldetag: 27.11.2012
(51) Int. Cl.: F01N 3/28, F01N 13/08, B01F 5/00, B01F 5/04, B01F 3/02

(54) **Abgasbehandlungsvorrichtung**
Exhaust gas treatment device
Dispositif de traitement des gaz d'échappement

(30) Priorität: 27.12.2011 DE 102011089969
(43) Veröffentlichungstag der Anmeldung: 03.07.2013
(73) Patentinhaber: Eberspächer Exhaust Technology GmbH & Co. KG, 66539 Neunkirchen (DE)
(72) Erfinder: Hanitzsch, Robert, 71394 Kernen (DE); Boriga, Remus, 73249 Wernau (DE); Marquardt-Stammberger, Michael, 72525 Münsingen (DE); Braun, Joachim, 73732 Esslingen (DE)
(74) Vertreter: BRP Renaud & Partner mbB Rechtsanwälte Patentanwälte Steuerberater

(56) Entgegenhaltungen:
- WO-A2-2008/144385
- DE-A1- 19 905 032
- FR-A1- 2 215 535
- FR-A1- 2 422 029
- FR-A1- 2 829 182
- US-A1- 2011 167 810

## Beschreibung

Die vorliegende Erfindung betrifft eine Abgasbehandlungsvorrichtung für eine Abgasanlage einer Brennkraftmaschine, vorzugsweise eines Kraftfahrzeugs, die ein Gehäuse aufweist, welches einen Abgasbehandlungsraum umschließt. Die Erfindung betrifft des Weiteren eine Abgasanlage mit einer derartigen Abgasbehandlungsvorrichtung.

Eine Abgasanlage dient der Abführung eines von der Brennkraftmaschine erzeugten Abgases und ist aus dem Stand der Technik hinlänglich bekannt. Hierbei kann das Abgas der Brennkraftmaschine unerwünschte bzw. schädliche Bestandteile enthalten, die es zu reduzieren gilt bzw. die vor dem Austritt des Abgases in die Umgebung aus dem Abgas entfernt werden sollen. Hierzu ist üblicherweise eine Abgasbehandlungsvorrichtung vorgesehen, welche einen vom Abgas durchströmbaren Abgasbehandlungsraum aufweist, der von einem Gehäuse der Abgasbehandlungsvorrichtung umschlossen ist. Innerhalb des Abgasbehandlungsraums ist in der Regel ein Katalysator bzw. Partikelfilter angeordnet, um das Abgas von besagten unerwünschten bzw. schädlichen Bestandteilen zu reinigen. Eine derartige Abgasanlage kann dabei von der Brennkraftmaschine zur Abgasbehandlungsvorrichtung zweiflutig ausgestaltet sein und dementsprechend zwei Abgaszuführleitungen aufweisen, die das von der Brennkraftmaschine produzierte Abgas in getrennten Strömen zur gemeinsamen Abgasbehandlungsvorrichtung führen, wobei die jeweilige Abgaszuführleitung fluidisch mit der Abgasbehandlungsvorrichtung verbunden ist. Die fluidische Verbindung der jeweiligen Abgaszuführungsleitung ist gewöhnlich derart realisiert, dass die Abgaszuführleitungen im Wesentlichen parallel zum Abgasbehandlungsraum verlaufen bzw. parallel in den Abgasbehandlungsraum münden.

Nachteilig dabei ist, dass das von der jeweiligen Abgaszuführleitung geführte Abgas, insbesondere bei hohen Geschwindigkeiten des Abgases, die mitunter bis zu 2/3 der Schallgeschwindigkeit und höher betragen können, innerhalb des Abgasbehandlungsraums separat verlaufen und somit nicht durchmischt werden bzw. den Abgasbehandlungsraum nicht gleichmäßig durchströmen. Eine Durchmischung des von der jeweiligen Abgaszuführleitung abgeführten Abgases vor der Durchströmung des jeweiligen Katalysators bzw. Partikelfilters und/oder eine gleichmäßige Durchströmung des jeweiligen Katalysators bzw. Partikelfilters ist jedoch erwünscht, um beispielsweise eine gleichmäßige Behandlung des Abgases zu gewährleisten. Des Weiteren kann die Abgasanlage stromab der Abgasbehandlungsvorrichtung eine Messeinrichtung aufweisen, die gewisse Bestandteile des Abgases, wie beispielsweise die Konzentration von Stickoxiden, misst. Eine quasi separate Durchströmung des von der jeweiligen Abgaszuführleitung geführten Abgases durch die Abgasbehandlungsvorrichtung ließe jedoch keine zuverlässige Aussagen über die gemessenen Messwerte zu, weil diese im Zweifel, das heißt insbesondere bei zweiflutigen Abgasanlagen und entsprechend hohen Geschwindigkeiten des Abgases, nur einer der jeweiligen Abgaszuführleitungen zuzuordnen wäre.

Eine mehrflutige Abgasanlage ist aus der DE 199 05 032 A1 bekannt. Diese Abgasanlage weist eine Abgasbehandlungsvorrichtung auf, in der ein Mischer angeordnet ist, der das Innere der Abgasbehandlungsvorrichtung in einen Einlassbereich und einen Durchströmungsbereich unterteilt. In den Einlassbereich münden mehrere Abgasrohre. Der Mischer weist mehrere Öffnungen sowie seitliche Aussparungen auf, durch welche Abgas vom Einlassbereich in den Durchströmungsbereich strömt.

Die FR 2 829 182 A1 zeigt eine Abgasanlage mit einer Abgasbehandlungsvorrichtung, in dem ein Mischelement angeordnet ist, welches das Innere der Abgasbehandlungsvorrichtung in einen Einlassbereich und einen Durchströmungsbereich unterteilt. In den Einlassbereich münden zwei Abgasrohre, wobei das Mischelement perforiert ist, so dass das Abgas durch die Perforation in den Durchströmungsbereich gelangt.

Die vorliegende Erfindung beschäftigt sich mit dem Problem, für eine Abgasbehandlungsvorrichtung für eine Abgasanlage einer Brennkraftmaschine sowie für eine derartige Abgasanlage eine bessere oder zumindest alternative Ausführungsform anzugeben, die sich insbesondere durch eine verbesserte Durchmischung vom Abgas von zumindest einer Abgas führenden Abgaszuführleitung in der Abgasbehandlungsvorrichtung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Abgasbehandlungsvorrichtung mit zumindest einem Einlass zu versehen, der die Zuführung vom Abgas zur Abgasbehandlungsvorrichtung von zumindest einer Seite zulässt, und das vom jeweiligen Einlass einströmende Abgas mit Hilfe eines Mischelements zu durchmischen, bevor das dann gemischte Abgas zu einem Durchströmungsbereich der Abgasbehandlungsvorrichtung gelangt. Somit ist es insbesondere möglich, das vom jeweiligen Einlass einströmende Abgas auch bei entsprechend hohen Geschwindigkeiten des Abgases zu durchmischen und eine gleichmäßige bzw. homogene Durchströmung von durch den zumindest einen Einlass strömenden Abgasstrom durch den Durchströmungsbereich und folglich auch eine gleichmäßige und homogene Behandlung des Abgases in der Abgasbehandlungsvorrichtung zu gewährleisten.

Die Abgasbehandlungsvorrichtung dient also der Behandlung des Abgases, das von einer Brennkraftmaschine stammt, wobei die Abgasbehandlungsvorrichtung bevorzugt für den Einsatz in einer Abgasanlage ausgestaltet ist. Insbesondere ist die Abgasbehandlungsvorrichtung für den Einsatz für eine solche Abgasanlage einer Brennkraftmaschine eines Kraftfahrzeugs vorgesehen, wobei die Abgasbehandlungsvorrichtung insbesondere im Bereich des Unterbodens des zugehörigen Fahrzeugs angeordnet werden kann.

Dem Erfindungsgedanken entsprechend weist die Abgasbehandlungsvorrichtung ein Gehäuse auf, welches einen Abgasbehandlungsraum der Abgasbehandlungsvorrichtung umschließt. Besagtes Mischelement unterteilt den Abgasbehandlungsraum in einen Einlassbereich und den Durchströmungsbereich, wobei der Einlassbereich stromaufseitig im Abgasbehandlungsraum angeordnet ist, während der Durchströmungsbereich stromabseitig im Abgasbehandlungsraum angeordnet ist. Der Einlassbereich und der Durchströmungsbereich sind bevorzugt vom gemeinsamen Gehäuse umschlossen, wobei das Gehäuse einlassseitig zumindest einen zum Einlassbereich offenen Einlass aufweist, der zum Anschließen von zumindest einer zugehörigen Abgaszuführleitung der besagten Abgasanlage dient. Der zumindest eine einlassseitig angeordnete und zum Einlassbereich offene Einlass ist hierbei seitlich oder frontal des Einlassbereichs angeordnet. Zudem weist das Mischelement zumindest zwei Eingangsöffnungen auf, nämlich wenigstens eine den Einlassbereich fluidisch mit dem Durchströmungsbereich verbindende erste Eingangsöffnung und wenigstens eine den Einlassbereich fluidisch mit dem Durchströmungsbereich verbindende zweite Eingangsöffnung. Hierbei ist die zumindest eine erste Eingangsöffnung einer ersten Seite des Einlassbereichs zugewandt, während die zumindest eine zweite Eingangsöffnung einer zweiten Seite des Einlassbereichs zugewandt ist. Mit anderen Worten, die jeweilige erste Einlassöffnung und die jeweilige zweite Einlassöffnung sind verschiedenen Seiten zugewandt, die voneinander beabstandet sind und insbesondere voneinander abgewandt sind. Bevorzugt sind die erste Seite und die zweite Seite unterschiedlich angeordnet, so dass die zumindest eine erste Eingangsöffnung und die zumindest eine zweite Eingangsöffnung unterschiedlichen Seiten des Einlassbereichs zugewandt sind. Die jeweiligen, diesen Seiten zugewandten Eingangsöffnungen gewährleisten dann, dass durch den zumindest einen Einlass einströmendes Abgas durchmischt wird, bevor es durch den Durchströmungsbereich strömt.

Die erste Eingangsöffnung und die zweite Eingangsöffnung sind vorzugsweise derart ausgebildet und/oder derart einer solchen erste Seite bzw. einer solchen zweiten Seite zugewandt, dass das durch die erste Eingangsöffnung in den Durchströmungsbereich strömende Abgas eine erste Strömungsrichtung aufweist, die im Vergleich zum in einer zweiten Strömungsrichtung durch die zweite Eingangsöffnung in den Durchströmungsbereich strömende Abgas zumindest eine andere, insbesondere entgegengesetzte, Richtungskomponente aufweist. Somit treffen das durch die erste Eingangsöffnung strömende Abgas und das durch die zweite Eingangsöffnung strömende Abgas im Durchströmungsbereich aufeinander. Dadurch ist ein verbessertes Durchmischen des Abgases erreicht.

Ein besseres Durchmischen des Abgases ist insbesondere auch dadurch erreicht, dass die erste Seite und die zweite Seite bevorzugt seitlich des Einlassbereichs, das heißt insbesondere nicht frontal des Einlassbereichs, angeordnet sind. Dabei ist mit "frontal" vorliegend insbesondere der dem Durchströmungsbereich gegenüberliegende Abschnitt des Einlassbereiches zu verstehen. Das heißt also, dass die erste Seite und die zweite Seite jeweils zumindest eine seitliche, nicht frontale Komponente aufweisen. Insbesondere können sich die erste Seite und die zweite Seite gegenüberliegen.

Durch die Verbindung des Einlassbereiches mit dem Durchströmungsbereich definiert die erste Eingangsöffnung einen ersten Eingangsquerschnitt, während die zweite Eingangsöffnung einen zweiten Eingangsquerschnitt definiert. Bevorzugt sind Ausgestaltungen, bei denen die erste Seite und die zweite Seite bzw. die erste Eingangsöffnung und die zweite Eingangsöffnung derart ausgebildet bzw. angeordnet sind, dass eine zur ersten Seite weisende erste Normale des ersten Eingangsquerschnittes zumindest eine andere Richtungskomponente aufweist als eine zur zweiten Seite weisende zweite Normale des zweiten Querschnittes. Dabei muss der jeweilige Eingangsquerschnitt nicht zwangsläufig eben ausgebildet bzw. geformt sein. Insbesondere sind Ausführungsformen vorstellbar, bei denen zumindest einer der Eingangsquerschnitte gekrümmt ausgebildet ist. Besagte andere Richtungskomponente kann dabei insbesondere dadurch gegeben sein, dass die entsprechende Richtungskomponente der ersten Normale und der zweiten Normale entgegengesetzt gerichtet sind. In diesem Fall können die erste Eingangsöffnung und die zweite Eingangsöffnung insbesondere zu gegenüberliegenden Seiten des Einlassbereiches hin offen sein.

Weist das Mischelement zwei oder mehrere erste Eingangsöffnungen auf, so können die ersten Eingangsöffnungen erste Eingangsquerschnitte mit der gleichen Form und/oder Größe aufweisen. Es sind auch Ausgestaltungen vorstellbar, bei denen die ersten Eingangsquerschnitte der ersten Eingangsöffnungen unterschiedliche Formen und/oder Größen aufweisen. Entsprechendes gilt für die zweiten Eingangsöffnungen und die zugehörigen zweiten Eingangsquerschnitte. Dabei sind Ausführungsformen bevorzugt, bei denen die zumindest eine erste Normale des zumindest einen ersten Eingangsquerschnittes zumindest eine andere Richtungskomponente aufweist als die zumindest eine zweite Normale des zumindest einen zweiten Eingangsquerschnittes.

Erfindungsgemäß weist das Gehäuse einlassseitig zwei zum Einlassbereich offene Einlässe auf, die zum Anschließen von zugehörigen Abgaszuführleitungen der besagten Abgasanlage dienen. Ein erster einlassseitig angeordneter und zum Einlassbereich offener Einlass ist hierbei an der ersten Seite des Einlassbereichs angeordnet, während ein zweiter einlassseitiger und zum Einlassbereich offener zweiter Einlass an der zweiten Seite des Einlassbereichs angeordnet ist. Zudem weist das Mischelement zumindest zwei Eingangsöffnungen der besagten Art auf, nämlich wenigstens eine solche den Einlassbereich fluidisch mit dem Durchströmungsbereich verbindende erste Eingangsöffnung und wenigstens eine solche den Einlassbereich fluidisch mit dem Durchströmungsbereich verbindende zweite Eingangsöffnung. Hierbei ist die zumindest eine erste Eingangsöffnung der ersten Seite des Einlassbereichs, also dem ersten Einlass zugewandt, während die zumindest eine zweite Eingangsöffnung der zweiten Seite des Einlassbereichs, also dem zweiten Einlass zugewandt ist. Mit anderen Worten, die zumindest eine erste Eingangsöffnung ist derjenigen Seite des Einlassbereichs zugewandt, an der der erste Einlass angeordnet ist, während die zumindest zweite Eingangsöffnung derjenigen Seite des Einlassbereichs zugeordnet ist, an der der zweite Einlass angeordnet ist. Bevorzugt sind die erste Seite und die zweite Seite unterschiedlich angeordnet, so dass das Abgas aus unterschiedlichen Seiten zum Einlassbereich strömt. Die jeweiligen, diesen Seiten zugewandten Eingangsöffnungen gewährleisten dann, dass das jeweils von den unterschiedlichen Einlässen einströmende Abgas durchmischt wird, bevor es durch den Durchströmungsbereich strömen kann.

Die Abgasbehandlungsvorrichtung weist erfindungsgemäß zumindest einen solchen ersten Einlass und zumindest einen solchen zweiten Einlass auf. Es versteht sich jedoch, dass die im Folgenden wiedergegebene Beschreibung analog auf eine Abgasbehandlungsvorrichtung mit mehr als zwei Einlässen übertragbar ist.

Die jeweiligen Einlässe können beispielsweise im Gehäuse der Abgasbehandlungsvorrichtung eingearbeitet, etwa ausgestanzt bzw. ausgeschnitten sein. Auch ist es möglich, die Einlässe durch ein entsprechendes Formverfahren des Gehäuses im Einströmungsbereich auszubilden.

Eine verbesserte Durchmischung des durch die jeweiligen Einlässe in den Einströmungsbereich einströmenden Abgases wird erfindungsgemäß dadurch erreicht, dass die erste Seite und die zweite Seite des Einlassbereichs quer zur Längsrichtung des Gehäuses voneinander beabstandet sind und einander gegenüberliegen. Das heißt insbesondere, dass durch einen der Einlässe in den Einlassbereich strömendes Abgas eine Strömungsrichtung aufweist, die der Strömungsrichtung des durch den anderen Einlass einströmenden Abgases im Wesentlichen entgegengerichtet ist, was dazu führen kann, dass das Abgas bereits im Einlassbereich teilweise durchmischt wird. Besonders bevorzugt sind hierbei Ausführungsformen, bei denen sich die erste Seite und die zweite Seite diametral gegenüberliegen. Dies führt zu einer optimalen Nutzung des Einlassbereichs im Sinne eines maximierten bzw. vergrößerten Strömungspfades des vom jeweiligen Einlass einströmenden Abgases. Bei diesen Ausführungsformen liegen sich die erste Seite und die zweite Seite folglich in einer Abstandsrichtung gegenüber. Dementsprechend sind die zumindest eine erste Eingangsöffnung und die zumindest eine zweite Eingangsöffnung voneinander abgewandt, also in entgegengesetzten Richtungen zum Einlassbereich offen.

Die Anordnung der Eingangsöffnungen in einem mittigen Bereich des Mischelements führt zu einer verbesserten Wirkung des Mischelements, wobei die Eingangsöffnungen zweckmäßig bezüglich der Abstandsrichtung mittig angeordnet sind. Eine derartige Anordnung der Eingangsöffnungen führt ebenfalls zu einem verlängerten Strömungspfad des von dem jeweiligen Einlass einströmenden Abgases, wobei die mittige Positionierung dazu führt, dass die wesentliche Durchmischung des Abgases unmittelbar stromab des Mischelements stattfindet, weil das vom ersten Einlass einströmende Abgas im Wesentlichen durch die zumindest eine erste Eingangsöffnung strömt, während das vom zweiten Einlass einströmende Abgas im Wesentlichen durch die zumindest eine zweite Eingangsöffnung strömt.

Dieser Effekt kann dadurch verstärkt werden, dass die zumindest eine erste Eingangsöffnung und die zumindest eine zweite Eingangsöffnung zueinander versetzt angeordnet sind. Erfindungsgemäß ist die versetzte Anordnung der jeweiligen Eingangsöffnungen quer zur Abstandsrichtung gegeben, derart, dass die zumindest eine erste Eingangsöffnung quer zur Abstandsrichtung versetzt zu der zumindest einen zweiten Eingangsöffnung ausgebildet ist, wobei diese versetzte Anordnung vorzugsweise senkrecht zur Abstandsrichtung gegeben ist. Weist das Mischelement mehrere erste Eingangsöffnung und/oder mehrere zweite Eingangsöffnungen auf, so sind bevorzugt sämtliche erste Eingangsöffnungen quer zu Abstandsrichtung versetzt zu sämtlichen zweiten Eingangsöffnungen und einander abwechselnd angeordnet.

Das vom jeweiligen Einlass in den Einlassbereich strömende Abgas kann mit Hilfe von zumindest einem Strömungskanal zur zugehörigen Eingangsöffnung geführt bzw. geleitet werden. Ein derartiger Strömungskanal ist erfindungsgemäß als eine Vertiefung im Mischelement ausgebildet, die insbesondere zur zugehörigen Eingangsöffnung führt bzw. in die zugehörige Eingangsöffnung mündet. Es versteht sich jedoch, dass das Abgas nicht zwangsläufig ausschließlich über den jeweiligen Strömungskanal zur zugehörigen Eingangsöffnung strömt. Zweckmäßig verläuft der Strömungskanal entlang der Abstandsrichtung und somit im Wesentlichen entlang der Strömungsrichtung des Abgases, welches von dem zugehörigen Einlass einströmt. Der Strömungskanal weist hierbei bevorzugt hin zur zugehörigen Eingangsöffnung einen konischen Verlauf auf. Das heißt, dass sich der Strömungskanal hin zur zugehörigen Eingangsöffnung aufweitet bzw. vergrößert oder verjüngt bzw. verkleinert. Zweckmäßig ist die den Strömungskanal ausbildende Vertiefung ecken- und kantenfrei, um eine möglichst reibungslose Strömung des Abgases zu ermöglichen. Es sind jedoch auch Ausführungsformen vorstellbar, bei denen die Vertiefung kantig bzw. eckig ausgebildet ist, um einen erhöhten Wirbel im Einlassbereich zu erzeugen. Bevorzugt werden Ausführungsformen, bei denen allen Eingangsöffnungen jeweils ein solcher zugehöriger Strömungskanal zugeordnet ist, wobei die Strömungskanäle bzw. die Vertiefungen, die einer der Seiten zugeordnet sind, zweckmäßig quer zur Abstandsrichtung zu den Strömungskanälen bzw. Vertiefungen, die der anderen Seite zugeordnet sind, versetzt angeordnet sind.

Das durch die jeweilige Eingangsöffnung strömende Abgas wird üblicherweise von der vom Einlassbereich abgewandten Rückseite des Mischelements abgelenkt und mit dem durch die zumindest eine andere Eingangsöffnung strömenden Abgas, welches ebenfalls von der Rückseite des Mischelements abgelenkt wird, durchmischt und in den Durchströmungsbereich geleitet. Hierbei kann es zum Aufbau eines sogenannten Gegendrucks kommen, der eine hohe Belastung des Mischelements darstellt. Insbesondere um dem entgegenzuwirken, weist das Mischelement erfindungsgemäß zumindest einen Preforationsbereich auf, der eine Perforation aufweist. Der perforierte Perforationsbereich erlaubt es nun, dass das Abgas auch über anderen Bereichen als durch die Eingangsöffnungen in den Durchströmungsbereich gelangen kann, was zur Reduzierung des besagten Gegendrucks führt. Der zumindest eine Perforationsbereich und/oder die zugehörige Perforation sind hierbei bevorzugt derart ausgestaltet, dass das Abgas hauptsächlich durch die Eingangsöffnungen strömt. Der zumindest eine Perforationsbereich kann insbesondere teilweise oder ganz innerhalb zumindest einer solchen Vertiefung angeordnet sein bzw. entlang zumindest einer solchen Vertiefung verlaufen. Auch kann die gesamte Fläche des Mischelements eine Perforation aufweisen.

Die Perforation kann hierbei eine beliebige Form aufweisen. Insbesondere ist die Perforation durch runde und/oder eckige und/oder schlitzartige bzw. nutartige Ausnehmungen im Mischelement ausgebildet.

Bei bevorzugten Ausführungsformen ist der Perforationsbereich zwischen den Vertiefungen angeordnet. Somit können zumindest einer der Strömungskanäle, der einer der Seiten zugeordnet ist, und einer der Perforationsbereiche, welcher zwischen den Vertiefungen der anderen Seite angeordnet ist, im Wesentlichen entlang einer Linie, die parallel zur Abstandsrichtung, verlaufen. Mit anderen Worten, entlang der Abstandsrichtung sind ein der ersten Seite zugeordneter Perforationsbereich und ein der zweiten Seite zugeordneter Strömungskanal benachbart. Das heißt insbesondere, dass das durch einen solchen Strömungskanal zur zugehörigen Eingangsöffnung geleitete Abgas nach dem Durchströmen dieser Eingangsöffnung auf eine gegenüberliegende und der anderen Seite zugeordnete Perforation trifft, so dass besagte Wirkung, nämlich eine teilweise Ablenkung und eine teilweise Rückströmung in den Einlassbereich, optimiert ist. Bevorzugt sind Ausführungsformen, bei denen sich quer zur Abstandsrichtung Strömungskanäle und Perforationsbereich der einen oder der anderen Seite abwechseln, während auf parallel zur Abstandsrichtung verlaufenden Linien jeweils ein Strömungskanal und eine Eingangsöffnung der ersten Seite und ein solcher Perforationsbereich der zweiten Seite verlaufen. Gleiches gilt für Strömungskanäle und zugehörige Eingangsöffnungen der zweiten Seite und Perforationsbereiche der ersten Seite.

Gemäß einer weiteren bevorzugten Ausführungsform ist zumindest einer der Einlässe, vorzugsweise jedoch beide, geneigt zur Längsrichtung des Gehäuses angeordnet. Das heißt, dass die normale des Einlasses geneigt zur Längsrichtung des Gehäuses verläuft. Dabei sind die Einlässe bevorzugt symmetrisch ausgebildet bzw. angeordnet, derart dass ein Neigungswinkel der Neigung einer der Einlässe bezüglich der Längsrichtung des Gehäuses dem negativen Wert des Neigungswinkels des anderen Einlasses entspricht. Durch die geneigte Anordnung bzw. Ausbildung des jeweiligen Einlasses wird die Anströmung des Mischelements optimiert bzw. verbessert. Des Weiteren erlaubt eine derartige Ausbildung bzw. Anordnung der Einlässe eine platzsparende Bauweise der Abgasbehandlungsvorrichtung bzw. der zugehörigen Abgasanlage. Hierbei beträgt der Neigungswinkel beispielsweise zwischen 30° und 90°, wobei der Neigungswinkel vorzugsweise zumindest 45° beträgt.

Zur weiteren Verbesserung der Anströmung des Mischelements ist das Mischelement bei einer bevorzugten Variante gekrümmt ausgebildet. Die Krümmung ist hierbei bevorzugt bezüglich des Einlassbereichs gegeben. Dabei kann das Mischelement bereichsweise hin zum Einlassbereich konvex und bereichsweise hin zum Einlassbereich konkav ausgebildet sein, wobei das Mischelement bevorzugt im Bereich der einen Seite konkav ausgebildet ist und im Bereich der anderen Seite konvexe ausgebildet ist. Auch ist es denkbar, dass der mittlere Bereich des Mischelements eine unterschiedliche Krümmung aufweist als die der ersten und zweiten Seite zugeordneten Bereiche. Bevorzugt ist das Mischelement hin zum Einlassbereich im Wesentlichen konvex ausgebildet. Hierbei bedeutet im Wesentlichen, dass die zumindest eine Vertiefung bzw. der zugehörige Strömungskanal zweckmäßig keinen hin zum Einlassbereich konvexe Ausbildung aufweist/aufweisen.

Das Mischelement kann aus Blech, bevorzugt aus einem einstückigen Blechteil durch Umformverfahren, Tiefziehen sowie Stanzen hergestellt werden. Ein derartiges Mischelement ist günstig herzustellen, so dass die Produktionskosten der Abgasbehandlungsvorrichtung gesenkt werden können. Es sind jedoch auch Mischelemente vorstellbar, die aus anderen Materialien und mit Hilfe von anderen Verfahren hergestellt sind, sofern sie sich für die in der Abgasbehandlungsvorrichtung herrschenden Gegebenheiten, insbesondere für die thermodynamischen Gegebenheiten, eignen.

Zur Verbesserung der Strömung des Abgases im Einlassbereich kann eine den Einlassbereich stromaufseitig begrenzende Abschlusswand des Gehäuses der Abgasbehandlungsvorrichtung ebenfalls gekrümmt ausgebildet sein. Hierbei ist die Abschlusswand bevorzugt derart ausgebildet, dass sie hin zum Mischelement konvex ausgebildet ist. Somit kann die Abgasbehandlungsvorrichtung im Bereich des Einströmungsbereichs die Form eines gekrümmten Rohrs aufweisen, was insbesondere eine platzsparende Bauweise der Abgasbehandlungsvorrichtung ermöglicht. Je nach Einbausituation bzw. Gegebenheiten im Einbauraum, kann es jedoch auch vorteilhaft sein, die Abschlusswand anderweitig gekrümmt, beispielsweise hin zum Mischelement konkav, oder eben, zu gestalten.

Die Behandlung des Abgases erfolgt bevorzugt im Durchströmungsbereich des Abgasbehandlungsraums, das heißt stromab des Mischelements. Im Durchströmungsbereich kann dabei zumindest ein Abgasbehandlungselement angeordnet sein. Ein derartiges Abgasbehandlungselement ist beispielsweise ein Katalysator und/oder ein Partikelfilter. Auch können im Durchströmungsbereich ein derartiger Katalysator bzw. mehrere Katalysatoren und/oder ein derartiger Partikelfilter bzw. mehrere Partikelfilter in beliebiger Reihenfolge angeordnet sein. Die Reihenfolge dieser Anordnung kann den jeweiligen Erfordernissen angepasst sein. Beispielsweise kann als Katalysator ein Oxidationskatalysator, ein NOX-Katalysator, ein Dreiwegekat sowie ein SCR-Katalysator zum Einsatz kommen, wobei der jeweilige Katalysator monolithisch ausgebildet bzw. ausgestaltet sein kann. Als Partikelfilter können etwa ein Dieselpartikelfilter sowie ein Ottopartikelfilter zum Einsatz kommen.

Gemäß einer vorteilhaften Weiterbildung der erfindungsgemäßen Lösung ist die Abgasbehandlungsvorrichtung Bestandteil einer Abgasanlage. Hierbei ist eine erste abgasführende Abgaszuführleitung der Abgasanlage an dem ersten Einlass der Abgasbehandlungsvorrichtung angeschlossen. Zudem ist eine zweite abgasführende Abgaszuführleitung am zweiten Einlas der Abgasbehandlungsvorrichtung angeschlossen. Die jeweilige Abgaszuführleitung ist beispielsweise über einen Abgaskrümmer an einer zugehörigen Brennkraftmaschine angeschlossen, so dass das von der Brennkraftmaschine produzierte Abgas über beide Abgaszuführleitungen zur Abgasbehandlungsvorrichtung strömt. Das durch die jeweilige Abgaszuführleitung zur Abgasbehandlungsvorrichtung strömende Abgas wird in der Abgasbehandlungsvorrichtung, insbesondere mit Hilfe des Mischelements, durchmischt, so dass eine homogene bzw. gleichmäßige Behandlung des Abgases in stromab des Mischelements verlaufenden bzw. angeordneten Durchströmungsbereich, in dem besagte Katalysatoren bzw. Partikelfilter angeordnet sein können, stattfinden kann.

Zudem kann die Abgasanlage stromab der Abgasbehandlungsvorrichtung eine Abgasabführleitung aufweisen, welche zur Abführung des Abgases von der Abgasbehandlungsvorrichtung an einem stromabseitig des Abgasbehandlungsraums bzw. der Abgasbehandlungsvorrichtung angeordneten und/oder ausgebildeten Auslass der Abgasbehandlungsvorrichtung angeschlossen ist. Die Abgasanlage kann zudem eine Messeinrichtung zur Ermittlung von Konzentrationen von Bestandteilen des behandelten Abgases aufweisen. Insbesondere ist eine derartige Messeinrichtung zur Ermittlung eines Stickoxidgehalts geeignet und ist beispielsweise als eine NOX-Sonde ausgestaltet. Die Messeinrichtung kann in einer Öffnung der Abgasabführleitung angeordnet sein. Die Durchmischung des Abgases innerhalb der Abgasbehandlungsvorrichtung sowie die homogene Behandlung im Durchströmungsbereich erlauben dabei zuverlässige Bestimmungen durch die Messeinrichtung.

Es versteht sich, dass die erfindungsrelevanten Gedanken analog auf eine Abgasbehandlungsvorrichtung mit mehr als zwei Einlässen anwendbar ist, ohne den Rahmen dieser Erfindung zu verlassen, wobei zumindest zwei dieser Einlässe an zwei unterschiedlichen Seiten des Einlassbereichs angeordnet sind. Entsprechendes gilt für eine Abgasanlage, die mehr als zwei Abgaszuführleitungen aufweist, wobei die Anzahl der Abgaszuführleitungen zweckmäßig der Anzahl der Einlässe entspricht.

Es sei ferner darauf hingewiesen, dass auch das Mischelement als Solches zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine isometrische Außenansicht einer Abgasanlage,
- Fig. 2: eine Außenansicht der Abgasanlage mit offenem Einlassbereich,
- Fig. 3: eine isometrische Ansicht eines Mischelements,
- Fig. 4: eine Seitenansicht der teilweise offenen Abgasanlage.

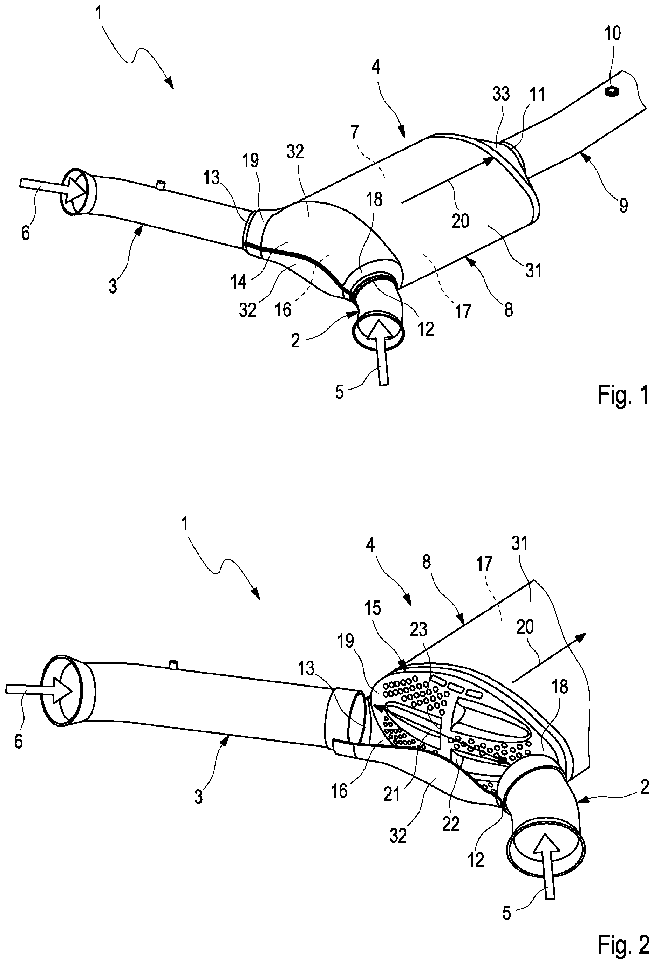

Fig. 1 und Fig. 2 zeigen eine Abgasanlage 1, die eine erste Abgaszuführleitung 2 und eine zweite Abgaszuführleitung 3 aufweist, die hier teilweise dargestellt sind. Die Abgaszuführleitungen 2, 3 der Abgasanlage 1 sind jeweils mit einer hier nicht gezeigten Brennkraftmaschine fluidisch verbunden, deren Abgas sie zu einer Abgasbehandlungsvorrichtung 4 der Abgasanlage 1 führen. Das durch die erste Abgaszuführleitung 2 strömende Abgas ist mit einem Pfeil 5 angedeutet und wird im Folgenden als erster Abgasstrom 5 bezeichnet, während das in der zweiten Abgaszuführleitung 3 strömende Abgas mit einem anderen Pfeil 6 angedeutet ist und im Folgenden als zweiter Abgasstrom 6 bezeichnet wird. Der erste Abgasstrom 5 und der zweite Abgasstrom 6 strömen zur Abgasbehandlungsvorrichtung 4 und durchströmen einen Abgasbehandlungsraum 7 der Abgasbehandlungsvorrichtung 4, der von einem Gehäuse 8 der Abgasbehandlungsvorrichtung 4 umschlossen ist. Die Abgasanlage 1 weist stromab der Abgasbehandlungsvorrichtung 4 eine Abgasabführleitung 9 auf, die fluidisch mit dem Abgasbehandlungsraum 7 bzw. der Abgasbehandlungsvorrichtung 4 verbunden ist und das Abgas von der Abgasbehandlungsvorrichtung 4 abführt. Die Abgasabführleitung 9 weist eine Öffnung 10 auf, in die eine Messeinrichtung, wie beispielsweise eine NOX-Sonde angeordnet werden kann, um die Konzentration von beispielsweise Stickstoffoxiden im in der Abgasbehandlungsvorrichtung 4 behandelten Abgas zu bestimmen. Die fluidische Verbindung zwischen der Abgasabführleitung 9 und der Abgasbehandlungsvorrichtung 4 ist mit Hilfe eines Auslasses 11 realisiert, der am stromabseitigen Endbereich der Abgasbehandlungsvorrichtung 4 ausgebildet ist, wobei der stromabseitige Endbereich 33 trichterförmig ausgebildet ist.

Das Anschließen der Abgaszuführleitungen 2, 3 an die Abgasbehandlungsvorrichtung 4 ist über Einlässe 12, 13 der Abgasbehandlungsvorrichtung 4 realisiert, die einlassseitig des Gehäuses 8 angeordnet sind. Am einlassseitigen Ende weist das Gehäuse 8 eine Abschlusswand 14 auf, die hin zur Auslassseite konvex ausgebildet ist. Prinzipiell kann die Abgasanlage auch eine einzelne derartige Abgaszuführleitung 2, 3 aufweisen, wobei die Abgasbehandlungsvorrichtung 4 in diesem Fall einen einzelnen derartigen Einlass 12, 13 aufweist.

Die Abgasbehandlungsvorrichtung 4 weist zudem ein Mischelement 15 auf (siehe Fig. 2), das den Abgasbehandlungsraum 7 in einen einlassseitigen Einlassbereich 16 und einen auslassseitigen Durchströmungsbereich 17 unterteilt. Ein erster Einlass 12 der Abgasbehandlungsvorrichtung 4 ist dabei zum Einlassbereich offen und auf einer ersten Seite 18 des Einlassbereichs 16 angeordnet. Hierbei ist die erste Abgaszuführleitung 2 an dem ersten Einlass 12 angeschlossen. Zudem ist ein zweiter Einlass 13 der Abgasbehandlungsvorrichtung 4 an einer zweiten Seite 19 des Einlassbereichs 16 angeordnet und ist zum Einlassbereich 16 offen. Die zweite Abgaszuführleitung 3 ist dabei an den zweiten Einlass 13 angeschlossen. Die erste Seite 18 und die zweite Seite 19 sind hierbei seitlich des Einlassbereiches 16 angeordnet. Der erste Abgasstrom 5 strömt also durch den ersten Einlass 12 in den Einlassbereich 16, während der zweite Abgasstrom 6 durch den zweiten Einlass 13 in den Einlassbereich 16 gelangt. Hierbei sind die erste Seite 18 und die zweite Seite 19 des Einlassbereichs 16 quer zu einer Längsrichtung 20 des Gehäuses 8 voneinander beabstandet und liegen einander diametral gegenüber. Dementsprechend liegt die erste Seite 18 der zweiten Seite 19 in einer Abstandsrichtung 21 gegenüber. Folglich sind auch die Einlässe 12, 13 entlang der Abstandsrichtung 21 voneinander beabstandet, wobei die Einlässe 12, 13 bezüglich der Längsrichtung 20 des Gehäuses 8 eine Neigung aufweisen und die Neigungen jeweils den gleichen Betragswert aufweisen. Hierbei betragen die Neigungswinkel bevorzugt zwischen 30 und 90°, vorzugsweise jedoch zumindest 45°. Die jeweiligen Abgaszuführleitungen 2, 3 münden also seitlich und mit einem Neigungswinkel in die Abgasbehandlungsvorrichtung 4 bzw. in den Einlassbereich 16.

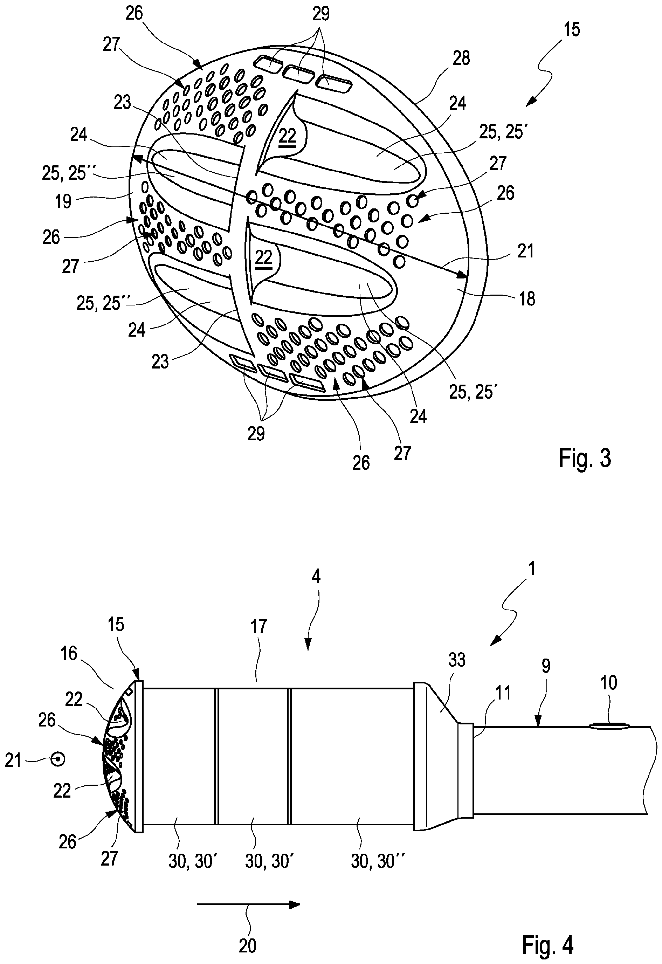

Um eine Strömung des Abgases in den Durchströmungsbereich 17 zu ermöglichen, weist das Mischelement 15, wie insbesondere der Fig. 3 zu entnehmen ist, Eingangsöffnungen 22, 23 auf, die den Einlassbereich 16 mit dem Durchströmungsbereich 17 fluidisch verbinden. Dabei ist zumindest eine erste Eingangsöffnung 22 vorgesehen, die der ersten Seite 18 zugewandt ist, während zumindest eine zweite Eingangsöffnung 23 vorgesehen ist, die der zweiten Seite 19 zugewandt ist. Dadurch weist das durch die zumindest eine erste Eingangsöffnung 22 in den Durchströmungsbereich 17 strömende Abgas eine erst Strömungsrichtung auf, die zumindest eine andere, insbesondere entgegengesetzte, Richtungskomponente aufweist als eine zweite Strömungsrichtung des durch die zumindest eine zweite Eingangsöffnung 23 in den Durchströmungsbereich 17 strömende Abgas. Bei der hier gezeigten Ausführungsform weist das Mischelement 15 zwei erste Eingangsöffnungen 22 und zwei zweite Eingangsöffnungen 23 auf. Die Eingangsöffnungen 22, 23 sind entlang der Abstandsrichtung 21 mittig im Mischelement 15 ausgebildet, wobei die ersten Eingangsöffnungen 22 näher zur ersten Seite 18 angeordnet sind, während die zweiten Eingangsöffnungen 23 näher zur zweiten Seite 19 angeordnet sind. Zudem sind die ersten Eingangsöffnungen 22 quer zur Abstandsrichtung 21 voneinander beabstandet. Gleiches gilt für die zweiten Eingangsöffnungen 23. Des Weiteren sind die ersten Eingangsöffnungen 22 senkrecht zur Abstandsrichtung 21 zueinander versetzt angeordnet.

Zudem sind vier Vertiefungen 24 vorgesehen, die jeweils einen Strömungskanal 25 ausbilden. Dabei ist jeder der Eingangsöffnungen 22, 23 ein derartiger Strömungskanal 25 zugeordnet. Beim gezeigten Beispiel weisen ferner alle Einlassöffnungen 22, 23 sowie alle Vertiefungen 24 bzw. Strömungskanäle 25 die gleiche Größe und Form auf. Die Strömungskanäle 25 weisen hierbei einen konischen Verlauf auf, wobei sie sich von der zugehörigen Eingangsöffnung 22, 23 hin zur zugehörigen Seite 18, 19 verjüngen. Zudem sind die Vertiefungen 24 kanten- und eckfrei ausgebildet, um eine möglichst reibungslose Strömung des Abgases zu den jeweiligen Eingangsöffnungen 22, 23 zu ermöglichen.

Außerhalb der Vertiefungen 24, die den ersten Eingangsöffnungen 22 zugeordnet sind, sowie außerhalb der Vertiefungen 24 die den zweiten Eingangsöffnungen 23 zugeordnet sind, sind jeweils zwei Perforationsbereiche 26 angeordnet. Somit weist das Mischelement 15 insgesamt vier Perforationsbereiche 26 auf, wobei jeweils ein derartiger Perforationsbereich 26 quer zwischen den ersten Strömungskanälen 25 angeordnet ist, während ein solcher Perforationsbereich 26, bei der in Fig. 3 gezeigten Orientierung des Mischelements 15, unterhalb der unteren ersten Eingangsöffnung 22 bzw. der zugehörigen Vertiefung 24 angeordnet ist und ein derartiger Perforationsbereich 26 oberhalb der oberen zweiten Eingangsöffnung 23 bzw. der zugehörigen Vertiefung 24 angeordnet ist. Insgesamt ist das Mischelement 15 somit derart ausgebildet, dass jeweils ein Strömungskanal 25 auf der ersten Seite 18 oder der zweiten Seite 19 und ein Perforationsbereich 26 auf der zweiten Seite 19 oder der ersten Seite 18 im Wesentlichen entlang einer Linie verlaufen, die parallel zur Abstandsrichtung 21 verläuft. Ferner ist der jeweilige Perforationsbereich 26 perforiert bzw. weist zumindest eine Perforation 27 auf.

Hierdurch wird eine platzsparende und gleichzeitig effektive Durchmischung des ersten Abgasstromes 5 und des zweiten Abgasstromes 6 erreicht. Dies wird auch dadurch erreicht, dass das Mischelement 15, wie insbesondere der Fig. 4 zu entnehmen ist, hin zum Einlassbereich 16 konvex ausgebildet ist. So strömt der erste Abgasstrom 5 durch den ersten Einlass 12 und vorwiegend über die zugehörigen Strömungskanäle 25' zu den ersten Eingangsöffnungen 22, wobei der erste Abgasstrom 5 in Richtung der zweiten Seite 19 strömt. Somit gelangt der erste Abgasstrom 5 auf eine vom Einlassbereich 16 abgewandte Rückseite 28 des Mischelements 15 dem Durchströmungsbereich 17. Auf der Rückseite 28 des Mischelements 15 wird der erste Abgasstrom 5 abgelenkt und strömt in Richtung des Durchströmungsbereichs 17. Ein anderer Teil des ersten Abgasstroms 5 strömt über die Perforationen 27 in den Durchlassbereich 16, wobei im gezeigten Beispiel die Perforationsbereiche 26 derart ausgebildet und angeordnet sind bzw. die Perforationen 27 derart ausgestaltet sind, dass der erste Abgasstrom 5 vorwiegend über die ersten Eingangsöffnungen 22 in den Durchströmungsbereich 17 strömt. Gleiches gilt für den zweiten Abgasstrom 6, der über die zugehörigen Strömungskanäle 25" und durch die zweiten Eingangsöffnungen 23 bzw. über die Performationen 27 der zugehörigen Perforationsbereiche 26 in den Durchströmungsbereich 17 gelangt bzw. auf die Rückseite 28 des Mischelements 15 trifft.

Das Mischelement 15 weist in seinem quer zur Abstandsrichtung 21 ausgebildeten Endbereichen jeweils drei Ausnehmungen 29 auf, die ebenfalls dem Einlassbereich 16 und den Durchströmungsbereich 17 fluidisch verbinden und somit auch eine Strömungsmöglichkeit für das Abgas darstellen. Wie in Fig. 4 zu sehen ist, sind im Durchströmungsbereich 17 der Abgasbehandlungsvorrichtung 4 entlang der Längsrichtung 20 des Gehäuses 8 drei vereinfacht dargestellte Abgasbehandlungselemente 30 angeordnet. Die Durchmischung des ersten Abgasstroms 5 und des zweiten Abgasstroms 6 mit Hilfe der stromeinlassseitigen Maßnahmen bzw. Ausbildungen der Abgasbehandlungsvorrichtung 4, insbesondere mit Hilfe des Mischelements 15, haben zur Folge, dass die Abgasbehandlungselemente 30 gleichmäßig von beiden Abgasströmen 5, 6 durchströmt und dementsprechend behandelt werden. Das dann behandelte und in die Abgasabführleitung 9 gelangende Abgas ist dementsprechend homogenisiert, so dass die mit Hilfe der Messeinrichtung, die beispielsweise in der Öffnung 10 der Abgasabführleitung 9 angeordnet sein kann, ein zuverlässiges und repräsentatives Ergebnis liefern kann.

Als Abgasbehandlungselemente 30 können beispielsweise Katalysatoren 30' bzw. Partikelfilter 30" zum Einsatz kommen, wobei die Anordnung entlang der Längsrichtung 20 den jeweiligen Erfordernissen angepasst sein kann. Im gezeigten Beispiel sind exemplarisch entlang der Längsrichtung 20 zunächst zwei Katalysatoren 30' und anschließend ein Partikelfilter 30", insbesondere ein Dieselpartikelfilter bzw. Ottopartikelfilter 30", angeordnet. Als Katalysatoren 30' kommen insbesondere monolithische ausgebildete bzw. ausgestattete Katalysatoren, beispielsweise Oxidationskatalysatoren 30' bzw. NOX-Katalysatoren 30', zum Einsatz.

Die Montage bzw. das Zusammenbauen der Abgasbehandlungsvorrichtung 4 kann beispielsweise wie folgt realisiert sein. Das Gehäuse 8 der Abgasbehandlungsvorrichtung 4 ist, wie insbesondere in Fig. 1 zu sehen, durch ein gewickeltes Blechstück 31 hergestellt. Das Mischelement 15 ist, wie insbesondere der Fig. 2 zu entnehmen ist, einlassseitige des gewickelten Blechstücks 31 in das Blechstück 31 positioniert und insbesondere reingeschoben. Anschließend kann das Mischelement 15 mit dem gewickelten Blechstück 31 verlötet oder verschweißt oder auf eine andere geeignete Weise verbunden werden. Das einlassseitige Ende des Gehäuses 8 bilden zwei symmetrisch ausgebildete Blechschalen 32, wobei Fig. 2 eine der Blechschalen 32 zeigt, während in Fig. 1 beide Blechschalen 32 zu sehen sind. Die Blechschalen 32 können ihrerseits auch mit dem gewickelten Blechstück 31 verbunden, beispielsweise verschweißt werden. Wie insbesondere der Fig. 4 zu entnehmen ist, ist der Auslass 11 der Abgasbehandlungsvorrichtung 4 durch den trichterförmigen, insbesondere aus Blech hergestellten Endbereich 33 realisiert, der ebenfalls mit dem Blechstück 31 verschweißt sein kann.

## Patentansprüche

1. Abgasbehandlungsvorrichtung (4) für eine Abgasanlage (1) einer Brennkraftmaschine, vorzugsweise eines Kraftfahrzeugs, mit einem Gehäuse (8), das einen Abgasbehandlungsraum (7) umschließt, wobei
- ein Mischelement (15) vorgesehen ist, das den Abgasbehandlungsraum (7) in einen stromaufseitigen Einlassbereich (16) und einen stromabseitigen Durchströmungsbereich (17) unterteilt,
- das Gehäuse (8) einlassseitig zumindest einen zum Einlassbereich (16) offenen Einlass (12, 13) zum Anschließen zumindest einer Abgaszuführleitung (2, 3) aufweist,
- das Mischelement (15) zumindest eine den Einlassbereich (16) fluidisch mit dem Durchströmungsbereich (17) verbindende erste Eingangsöffnung (22) aufweist, die einer ersten Seite (18) des Einlassbereichs (16) zugewandt ist,
- das Mischelement (15) zumindest eine den Einlassbereich (16) fluidisch mit dem Durchströmungsbereich (17) verbindende zweite Eingangsöffnung (23) aufweist, die einer zweiten Seite (19) des Einlassbereichs (16) zugewandt ist,
- **dadurch gekennzeichnet,**
- **dass** das Gehäuse (8) einlassseitig einen zum Einlassbereich (16) offenen ersten Einlass (12) zum Anschließen einer ersten Abgaszuführleitung (2) aufweist, der an der ersten Seite (18) des Einlassbereichs (16) angeordnet ist,
- **dass** das Gehäuse (8) einlassseitig einen zum Einlassbereich (16) offenen zweiten Einlass (13) zum Anschließen einer zweiten Abgaszuführleitung (3) aufweist, der an der zweiten Seite (19) des Einlassbereichs (16) angeordnet ist,
- **dass** die erste Seite (18) und die zweite Seite (19) des Einlassbereichs (16) quer zur Längsrichtung (20) des Gehäuses (8) voneinander beabstandet sind und einander, insbesondere diametral, gegenüberliegen,
- **dass** die erste Seite (18) in einer Abstandsrichtung (21) der zweiten Seite (19) gegenüberliegt und dass die zumindest eine erste Eingangsöffnung (22) und die zumindest eine zweite Eingangsöffnung (23) quer zur Abstandsrichtung (21) zueinander versetzt angeordnet sind,
- **dass** das Mischelement (15) an seiner dem Einlassbereich (16) zugewandten Seite zumindest eine Vertiefung (14) aufweist, die einen zu einer der Eingangsöffnungen (22, 23) führenden Strömungskanal (25) bildet, wobei insbesondere vorgesehen sein kann, dass zumindest ein solcher Strömungskanal (25) im Wesentlichen parallel zur Abstandsrichtung (21) verläuft,
- **dass** das Mischelement (15) wenigstens einen Perforationsbereich (26) aufweist, der eine Perforation (27) aufweist, wobei der Perforationsbereich insbesondere außerhalb der wenigstens einen Vertiefung (24) verläuft.

2. Abgasbehandlungsvorrichtung nach Anspruch 1,
**dadurch gekennzeichnet,**
**dass** die Eingangsöffnungen (22, 23) mittig im Mischelement (15) angeordnet sind.

3. Abgasbehandlungsvorrichtung nach Anspruch 1 oder 2,
**dadurch gekennzeichnet,**
**dass** zumindest einer der einer der Seiten (18, 19) zugeordneten Strömungskanäle (25) und zumindest einer der außerhalb der zumindest einen Vertiefung (24) der anderen Seite (18, 19) angeordneten Perforationsbereiche (26) im Wesentlichen entlang einer Linie verlaufen, die parallel zur Abstandsrichtung (21) verläuft.

4. Abgasbehandlungsvorrichtung nach einem der Ansprüche 1 bis 3,
**dadurch gekennzeichnet,**
**dass** die Normale von zumindest einem der Einlässe (12, 13) geneigt zur Längsrichtung (20) des Gehäuses (8) verläuft.

5. Abgasbehandlungsvorrichtung nach einem der Ansprüche 1 bis 4,
**dadurch gekennzeichnet,**
**dass** das Mischelement (15) gekrümmt, insbesondere zum Einlassbereich (16) hin im Wesentlichen konvex, ausgebildet ist.

6. Abgasbehandlungsvorrichtung nach einem der Ansprüche 1 bis 5,
**dadurch gekennzeichnet,**
**dass** das Gehäuse (8) einlassseitig eine dem Mischelement (15) gegenüberliegende Abschlusswand (14) aufweist, die gekrümmt, insbesondere hin zum Mischelement (15) konvex, ausgebildet ist.

7. Abgasbehandlungsvorrichtung nach einem der Ansprüche 1 bis 6,
**dadurch gekennzeichnet,**
**dass** im Durchströmungsbereich (17) zumindest ein Abgasbehandlungselement (30), insbesondere ein Katalysator (30') und/oder ein Partikelfilter (30"), angeordnet ist.

8. Abgasbehandlungseinrichtung nach einem der Ansprüche 1 bis 7,
**dadurch gekennzeichnet,**
**dass** die erste Seite (18) und/oder die zweite Seite (19) nicht frontal bezügich des Einlassbereiches (16) angeordnet sind/ist.

9. Abgasanlage (1) für eine Brennkraftmaschine, vorzugsweise eines Kraftfahrzeugs, mit einer Abgasbehandlungsvorrichtung (4) nach einem vorherigen Ansprüche, wobei zumindest eine Abgaszuführleitung (2, 3) der Abgasanlage (1) an zumindest einen Einlass (12, 13) der Abgasbehandlungsvorrichtung (4) angeschlossen ist.

10. Abgasanlage nach Anspruch 9,
**dadurch gekennzeichnet,**
**dass** die Abgasanlage (1) stromab der Abgasbehandlungsvorrichtung (4) eine Abgasabführleitung (9) aufweist, die an einem stromabseitigen Auslass (11) der Abgasbehandlungsvorrichtung (4) angeschlossen ist, wobei insbesondere vorgesehen sein kann, dass die Abgasabführleitung (9) eine Messeinrichtung zur Messung eines Stickoxidgehalts aufweist, die in einer Öffnung (10) der Abgasabführleitung (9) angeordnet ist.

## Claims

1. An exhaust gas treatment device (4) for an exhaust system (1) of an internal combustion engine, preferably of a motor vehicle, having a housing (8) which encloses an exhaust gas treatment chamber (7), wherein
- a mixing element (15) is provided, which divides the exhaust gas treatment chamber (7) into an upstream-side inlet region (16) and a downstream-side through-flow region (17),
- the housing (8) has on the inlet side at least one inlet (12, 13), which is open towards the inlet region (16), for attaching at least one exhaust gas feed line (2, 3),
- the mixing element (15) has at least one first input opening (22) which connects the inlet region (16) fluidically to the through-flow region (17) and faces a first side (18) of the inlet region (16),
- the mixing element (15) has at least one second input opening (23) which connects the inlet region (16) fluidically to the through-flow region (17) and faces a second side (19) of the inlet region (16)
- **characterized in that**
- the housing (8) has on the inlet side a first inlet (12) for attaching a first exhaust gas feed line (2), which inlet is open towards the inlet region (16) and is arranged on the first side (18) of the inlet region (16),
- the housing (8) has on the inlet side a second inlet (13) for attaching a second exhaust gas feed line (3), which inlet is open towards the inlet region (16) and is arranged on the second side (19) of the inlet region (16),
- the first side (18) and the second side (19) of the inlet region (16) are spaced apart from each other transversely to the longitudinal direction (20) of the housing (8) and are opposite each other, in particular diametrically,
- the first side (18) is opposite the second side (19) in a spacing direction (21) and that the at least one first input opening (22) and the at least one second input opening (23) are arranged offset to each other transversely to the spacing direction (21),
- the mixing element (15) has at least one depression (14) on its side facing the inlet region (16), which depression forms a flow channel (25) which leads to one of the input openings (22, 23), wherein it can in particular be provided for at least one such flow channel (25) to run substantially parallel to the spacing direction (21),
- the mixing element (15) has at least one perforation region (26), which has a perforation (27), wherein the perforation region in particular runs outside the at least one depression (24).

2. The exhaust gas treatment device according Claim 1,
**characterised in that**
the input openings (22, 23) are arranged in the centre of the mixing element (15).

3. The exhaust gas treatment device according to Claim 1 or 2,
**characterised in that**
at least one of the flow channels (25) assigned to one of the sides (18, 19) and at least one of the perforation regions (26) arranged outside the at least one depression (24) of the other side (18, 19) run substantially along a line which runs parallel to the spacing direction (21).

4. The exhaust gas treatment device according to one of Claims 1 to 3,
**characterised in that**
the normal of at least one of the inlets (12, 13) runs in an inclined manner to the longitudinal direction (20) of the housing (8).

5. The exhaust gas treatment device according to one of Claims 1 to 4,
**characterised in that**
the mixing element (15) is curved, in particular substantially convex towards the inlet region (16).

6. The exhaust gas treatment device according to one of Claims 1 to 5,
**characterised in that**
the housing (8) has on the inlet side an end wall (14) which is opposite the mixing element (15) and is curved, in particular convex towards the mixing element (15).

7. The exhaust gas treatment device according to one of Claims 1 to 6,
**characterised in that**
at least one exhaust gas treatment element (30), in particular a catalyst (30') and/or a particle filter (30"), is arranged in the through-flow region (17).

8. The exhaust gas treatment device according to one of Claims 1 to 7,
**characterised in that**
the first side (18) and/or the second side (19) is/are not arranged frontally with respect to the inlet region (16).

9. An exhaust system (1) for an internal combustion engine, preferably of a motor vehicle, having an exhaust gas treatment device (4) according to one of the preceding claims, wherein at least one exhaust gas feed line (2, 3) of the exhaust system (1) is attached to at least one inlet (12, 13) of the exhaust gas treatment device (4).

10. The exhaust system according to Claim 9,
**characterised in that**
the exhaust system (1) has an exhaust gas discharge line (9) downstream of the exhaust gas treatment device (4), which line (9) is attached to a downstream-side outlet (11) of the exhaust gas treatment device (4), wherein it can in particular be provided for the exhaust gas discharge line (9) to have a measurement device for measuring a nitrogen oxide content, which is arranged in an opening (10) in the exhaust gas discharge line (9).

## Revendications

1. Dispositif de traitement des gaz d'échappement (4) pour un système d'échappement (1) d'un moteur à combustion interne, de préférence d'un véhicule automobile, avec un carter (8), qui entoure une chambre de traitement des gaz d'échappement (7), dans lequel
- un élément de mélange (15) est prévu, qui subdivise la chambre de traitement des gaz d'échappement (7) en une zone d'entrée en amont (16) et une zone de traversée en aval (17),
- le carter (8) présente côté entrée au moins une entrée (12, 13) ouverte sur la zone d'entrée (16) pour le raccordement d'au moins une conduite d'amenée des gaz d'échappement (2, 3),
- l'élément de mélange (15) présente au moins une première ouverture d'entrée (22) reliant fluidiquement la zone d'entrée (16) à la zone de traversée (17), qui est tournée vers un premier côté (18) de la zone d'entrée (16),
- l'élément de mélange (15) présente au moins une deuxième ouverture d'entrée (23) reliant fluidiquement la zone d'entrée (16) à la zone de traversée (17), qui est tournée vers un deuxième côté (19) de la zone d'entrée (16),
- **caractérisé en ce**
- **que** le carter (8) présente côté entrée une première entrée (12) ouverte sur la zone d'entrée (16) pour le raccordement d'une première conduite d'amenée des gaz d'échappement (2), qui est agencée sur le premier côté (18) de la zone d'entrée (16),
- **que** le carter (8) présente côté entrée une deuxième entrée (13) ouverte sur la zone d'entrée (16) pour le raccordement d'une deuxième conduite d'amenée des gaz d'échappement (3), qui est agencée sur le deuxième côté (19) de la zone d'entrée (16),
- **que** le premier côté (18) et le deuxième côté (19) de la zone d'entrée (16) sont espacés l'un de l'autre transversalement à la direction longitudinale (20) du carter (8) et sont, en particulier diamétralement, opposés l'un à l'autre,
- **que** le premier côté (18) fait face dans une direction d'espacement (21) au deuxième côté (19) et que l'au moins une première ouverture d'entrée (22) et l'au moins une deuxième ouverture d'entrée (23) sont agencées de manière décalée l'un à l'autre par rapport à la direction d'espacement (21),
- **que** l'élément de mélange (15) présente au niveau de son côté tourné vers la zone d'entrée (16) au moins un évidement (14), qui forme un canal d'écoulement (25) conduisant à une des ouvertures d'entrée (22, 23), dans lequel en particulier il peut être prévu qu'au moins un tel canal d'écoulement (25) s'étend sensiblement parallèlement à la direction d'espacement (21),
- **que** l'élément de mélange (15) présente au moins une zone de perforation (26), qui présente une perforation (27), dans lequel la zone de perforation s'étend en particulier en dehors de l'au moins un évidement (24).

2. Dispositif de traitement des gaz d'échappement selon la revendication 1,
**caractérisé en ce**
**que** les ouvertures d'entrée (22, 23) sont agencées au centre dans l'élément de mélange (15).

3. Dispositif de traitement des gaz d'échappement selon la revendication 1 ou 2,
**caractérisé en ce**
**qu'**au moins un des canaux d'écoulement (25) associés à un des côtés (18, 19) et au moins une des zones de perforation (26) agencées en dehors de l'au moins un évidement (24) de l'autre côté (18, 19) s'étendent sensiblement le long d'une ligne, qui s'étend parallèlement à la direction d'espacement (21).

4. Dispositif de traitement des gaz d'échappement selon l'une quelconque des revendications 1 à 3,
**caractérisé en ce**
**que** la normale d'au moins une des entrées (12, 13) s'étend inclinée par rapport à la direction longitudinale (20) du carter (8).

5. Dispositif de traitement des gaz d'échappement selon l'une quelconque des revendications 1 à 4,
**caractérisé en ce**
**que** l'élément de mélange (15) est réalisé courbe, en particulier vers la zone d'entrée (16) de manière sensiblement convexe.

6. Dispositif de traitement des gaz d'échappement selon l'une quelconque des revendications 1 à 5,
**caractérisé en ce**
**que** le carter (8) présente côté entrée une paroi d'extrémité (14) opposée à l'élément de mélange (15), qui est réalisée courbe, en particulier vers l'élément de mélange (15) de manière convexe.

7. Dispositif de traitement des gaz d'échappement selon l'une quelconque des revendications 1 à 6,
**caractérisé en ce**
**qu'**au moins un élément de traitement des gaz d'échappement (30), en particulier un catalyseur (30') et/ou un filtre à particules (30") est agencé dans la zone de traversée (17).

8. Dispositif de traitement des gaz d'échappement selon l'une quelconque des revendications 1 à 7,
**caractérisé en ce**
**que** le premier côté (18) et/ou le deuxième côté (19) n'est/ne sont pas agencés frontalement par rapport à la zone d'entrée (16).

9. Système d'échappement (1) pour un moteur à combustion interne, de préférence d'un véhicule automobile, avec un dispositif de traitement des gaz d'échappement (4) selon l'une quelconque des revendications précédentes, dans lequel au moins une conduite d'amenée des gaz d'échappement (2, 3) du système d'échappement (1) est raccordée à au moins une entrée (12, 13) du dispositif de traitement des gaz d'échappement (4).

10. Système d'échappement selon la revendication 9,
**caractérisé en ce**
**que** le système d'échappement (1) présente en aval du dispositif de traitement des gaz d'échappement (4) une conduite d'évacuation des gaz d'échappement (9), qui est raccordée à une sortie en aval (11) du dispositif de traitement des gaz d'échappement (4), dans lequel il peut être prévu en particulier que la conduite d'évacuation des gaz d'échappement (9) présente un dispositif de mesure pour la mesure d'une teneur en azote, qui est agencé dans une ouverture (10) de la conduite d'évacuation des gaz d'échappement (9).
